(19) Europäisches Patentamt

European Patent Office

Office européen des brevets

(11) Publication number: **0 188 024 B1**

(12) **EUROPEAN PATENT SPECIFICATION**

(45) Date of publication of patent specification: **11.09.91**

(21) Application number: **85202073.4**

(22) Date of filing: **12.12.85**

(51) Int. Cl.⁵: **G05D 7/06**, F16K 31/06, F16K 39/02

(54) **Device for controlling the fluid flow rate through a pipe.**

(30) Priority: **24.12.84 NL 8403943**

(43) Date of publication of application:
**23.07.86 Bulletin 86/30**

(45) Publication of the grant of the patent:
**11.09.91 Bulletin 91/37**

(84) Designated Contracting States:
**AT BE CH DE FR GB IT LI LU NL SE**

(56) References cited:
**DE-A- 2 254 679**
**DE-A- 3 220 293**
**FR-A- 2 172 493**
**FR-A- 2 392 298**
**US-A- 3 159 178**

(73) Proprietor: **BRONKHORST HIGH-TECH B.V.**
**Nijverheidstraat 1a**
**NL-7261 AK Ruurlo(NL)**

(72) Inventor: **Ebskamp, Lambertus**
**Tjerk Hiddestraat 4**
**NL-7204 GD Zutphen(NL)**
Inventor: **Jouwsma, Wijbren**
**Lansteinerweg 2**
**NL-7242 HZ Lochem(NL)**

(74) Representative: **van der Beek, George Frans,**
**Ir. et al**
**Nederlandsch Octrooibureau Schevening-**
**seweg 82 P.O. Box 29720**
**NL-2502 LS 's-Gravenhage(NL)**

## Description

The invention relates to a 2-way valve device for controlling the quantity of fluid flow through a pipe (13; 40,53), said device being provided with one input and one output to connect the device in said pipe, a first control valve (11; 45) having a valve element whose position relative to the valve seat belonging to it directly or indirectly determines the quantity of the fluid flow through the pipe, said valve element being movable at one side by a progressive spring in one direction relative to the valve seat and at the other side by a first controllable actuation element against the spring force in the opposite direction relative to the valve seat, and provided with a second pressure reducing valve (12; 49) in series with said first control valve, the valve element of said pressure reducing valve being controlled by a second actuation mechanism receiving during operation signals corresponding to two predetermined pressures in the device.

A device of this type is described in DE-A 2 254 679, whereby specific reference is made to the valve constructions illustrated in the figures 10-13 of said publication. These prior art devices are digitally controlled, i.e. depending on the control signal supplied to the actuation element of first control valve the valve element thereof will be completely opened or completely closed. The valve element of the control valve is embodied as a hollow cylinder which is slidably positioned in a thereto destined passage in the device housing. An orifice of predetermined dimensions is made in the side wall of the valve element such that the centre space of the valve element may communicate with a fluid supply conduit. Because of this construction the electrical signal supplied to the actuator element may vary within certain limits without changing the actual fluid flow passage through the valve element. Therefore such a construction is less suited for a device which has to be controlled by an analog signal controlling the valve element such that the passage through the valve element can be adjusted to any dimension between completely opened or completely closed.

In the prior art devices the above mentioned predetermined pressures to which the actuation element of the second pressure reducing valve should respond are the pressures at the input and the output of the device. The actuation element should respond to these pressures such that the pressure drop across the first control valve will be constant in the situation in which the passage through the first control valve is completely opened, irrespective of variations in the input or output pressure of the device. Although under the influence of the second pressure reducing valve the pressure variations across the first control valve will be attenuated significantly some variation will remain. Taking into account that these prior art devices will be used mainly in oil pressure control systems used on hydaulically controlled machines some minor variation in the pressure drop across the control valve is, however, acceptable. On the other hand these minor variatons are in general not acceptable in devices destined to continuously control the flow of fluid through a pipe in an accurate manner.

A further development of the above mentioned prior art device is described in DE-A 3 220 293. This publication proposes to use a valve element having a number of orifices with different dimentions in combination with actuating means being capable of moving the valve element to one of a discrete number of possible positions in which the corresponding orifices are brought effectively into the passage between the fluid input and fluid output of the control valve. The actual functioning of this device is, however, completely identical to the functioning of the device described in the first mentioned publication.

A further valve system is described in FR-A 2 172 493. This prior art valve system comprises a number of fluid passages between a common fluid input and a common fluid output. In each passage a series circuit of a filter, a pressure reducing element and a binary controlled valve element is installed. The pressure reducing element in fact determines the flow rate through the respective passage, whereby, using the binary controlled valve element, this flow rate can be switched between completely zero and completely maximum. By selecting a suitable combination of control signals to the various valve elements it is possible to obtain at the combined output a specific flow rate value.

A general problem of continuously controllable valves results from the fact that the optimum diameter of the passage of the valve seat depends on the inlet pressure, the outlet pressure or both. In general, with increasing pressure difference over the valve a smaller diameter of passage must be used. In practice the diameter of passage will generally be selected on the basis of the minimum pressure difference to be expected (and the maximum quantity of fluid flow), with the result that this diameter of passage within the actual control range of the valve in many cases is actually too large, which means that the control performance of the valve is very adversely affected.

The object of the invention is now to eliminate the mentioned disadvantages and to provide a device suited for continuous control purposes whereby the control valve dimensions can be selected optimally irrespective of the input or output pressure of the device.

This object is achieved according to the invention with a device of the type mentioned in the preamble in that said two predetermined pressures are the pressures at the input and at the output of the first control valve and that the second actuation mechanism in response to the difference ($\Delta$P) between said predetermined pressures controls the valve element of the second pressure reducing valve such that said pressure difference is maintained constant.

By keeping the pressure difference over the first control valve constant it is possible to select the diameter of passage of the valve at an optimum value, so that the device according to the invention exhibits much improved control performance compared with the known control valve.

As will be described below in detail the optimum choice of diameter of passage of the vale seat often depends not only on the pressure difference over the control valve, but also on the pressure on the output side of the control valve. A preferred embodiment of the device according to the invention is therefore characterized in that the second actuation mechanism in response to the received pressure signals controls the valve element of the second pressure reducing valve such that the product of said pressure difference and the output pressure of the first control valve is maintained constant. This provides a device with optimum control performance, irrespective of varying pressures at the input side or output side of the device.

On the basis of this principle a further embodiment of the invention is charactized in that signals corresponding to one or more other pressures (Pa, Pb, Pc) are supplied to the actuation mechanism, and that the actuation mechanism in response to the received pressure signals controls the valve element of the second pressure reducing valve such that the product of said pressure difference and said other one or more pressures is maintained constant. In this way the control of the valve can be made dependent on any pressures which may, for example, prevail in a control system, with the advantages described above.

It is stated in the preamble that the position of the valve element of the control valve relative to its valve seat directly or indirectly determines the quantity of fluid flow through the pipe. In an embodiment in which this position directly determines the quantity of fluid flow through the pipe, the control valve is directly incorporated in the fluid flow pipe in series with the pressure reducing valve, and the pressure reducing valve is controlled by signals corresponding to the pressure upstream and downsteam of the control valve.

An embodiment in which the position of the valve element of the control valve relative to the valve seat belonging to it indirectly determines the quantity of fluid flow through the pipe is a pilot configuration comprising one of the above described devices which is according to the invention characterized in that the device comprises a third control valve (41) connected between the input conduit and the output conduit of the configuration and having a valve element which is pressed at one side by means of a spring (47) against its valve seat and at the other side is connected to a diaphragm (42) positioned between two chambers (P3, P1), the first chamber of which is coupled directly to said input conduit (40) whereas the second chamber is coupled on the one hand via a flow restricting element (44) to said input conduit and on the other hand to a control output of the configuration, whereby the device according to claim 1, 2 or 3 is coupled with its input to said control output and with its output to the output conduit of the configuration.

In this last-described embodiment the first control valve therefore serves as a pilot valve with which the third control valve is operated. Thanks to this pilot configuration, the current strength which has to be supplied to the electromagnet of the first control valve is in itself already greatly limited, in other words, with a relatively small current strength an extensive range of pressure differences is covered and a relatively large quantity of flow can be controlled. This pilot configuration does not, however, provide a solution to the control performance of the pilot valve depending on the differential pressure, which results in the performance of the whole device being dependent on differential pressure. Thanks to the addition of the pressure reducing valve and the controlling of it in such a way that the differential pressure over the first control valve is kept constant again, the first control valve - which acts as a pilot valve in this configuration - can be dimensioned in the optimum manner and also presents an optimum control performance. This means that the control performance of the control device as a whole is also optimised.

Another pilot configuration comprising a device of the aforementioned type is according to the invention characterized in that the configuration comprises a third control valve (41) having an input conduit and an output conduit and having a valve element which is pressed at one side by means of a spring (47) against its valveseat and at the other side is connected to a diaphragm (42) positioned between two chambers (P3, P1), the first chamber of which is coupled directly to said input conduit (40) whereas the second chamber is coupled on the one hand via a flow restricting element (44) to said input conduit and on the other hand to a control output of the configuration, in which configuration said control output is coupled to the input of the device according to claim 1, 2 or 3, the output conduit is coupled to the output of the first control valve of said device and the input conduit of said device is coupled to the input of the configaration, whereby the pressure at said input of the configuration is supplied to the actuation mechanism of the pressure reducing valve instead of the input pressure of the first control valve.

3

In this last mentioned embodiment the pressure reducing valve is therefore not directly controlled by signals corresponding to the input pressure and output pressure of the first control valve, it is controlled by signals which have a linear relationship therewith.

Further details, advantages and preferred embodiments of the invention will be discussed further below with reference to the figures.

Figure 1 shows schematically an electromagnetically operated control valve which is known from the state of the art.

Fig. 2 shows diagrams of devices according to the invention with $\Delta P$ regulation.

Fig. 3 shows diagrams of devices according to the invention with $\Delta P.P2$ regulation.

Fig. 4 shows schematically a practical embodiment of the device from Fig. 2b.

Fig. 5 shows schematically a practical embodiment of the device from Fig. 3a.

Fig. 6 shows the diagram of a device with pilot valve configuration.

Fig. 7 shows diagrams of devices according to the invention used with the device of Fig. 6.

Fig. 8 shows the diagram of a device according to the invention with $\Delta P.(Pa.Pb.Pc)$ regulation.

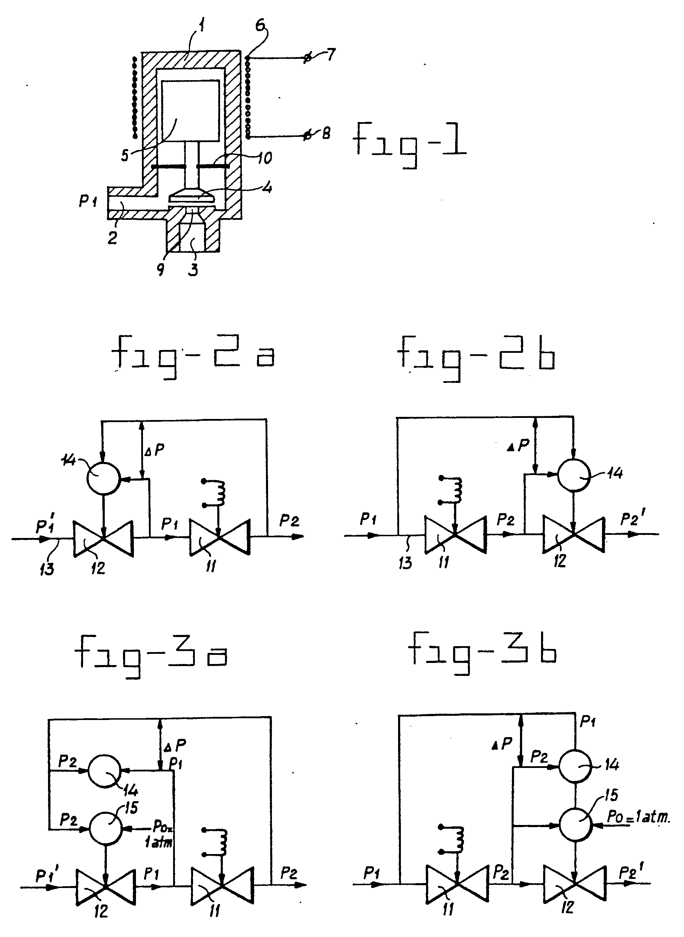

Fig. 1 shows schematically a valve which is known from the state of the art and which is operated by an electromagnet. This known valve is provided with the housing 1 with the inlet port 2, the outlet port 3, the valve seat with passage opening 9, the valve element 4, which is connected with the armature 5, the progressive spring 10 connected with the valve element 4 and with the housing 1, and the electromagnetic solenoid 6 with the terminals 7 and 8. The inlet pressure is P1, the outlet pressure P2, and over the valve there is therefore a pressure difference $P = P1 - P2$. The vertical upward force F for lifting the valve disc is determined by the flow I through the coil 6 of the electromagnet and by the pressure difference $\Delta P$ over the valve. The relationship between the pressure difference over the valve, the lifting force and the diameter of passage of the valve seat is determined by:

$$1/4.\Pi.d^2.\Delta P = F.$$

It will be clear that once the diameter d of the passage opening 9 of the valve seat is chosen, and it is also determined what the maximum current through the electromagnet coil can be, the maximum pressure difference $\Delta P$ will also be defined. The maximum pressure difference can be increased only by either increasing the current - which is often not desirable either from the mechanical point of view or on control engineering Consideration - or by reducing the diameter d of passage, but this means that the maximum quantity of flow from the valve is reduced, which is also often undesirable.

As is known, there is a relationship between the seat diameter d and the so-called KV value for valves. The KV value is expressed by the following formulae:

(a) for gases:

$$KV = \frac{\phi vn}{514}\sqrt{\frac{\rho n \cdot T}{\Delta P \cdot P2}} \qquad \text{subcritical range} \qquad (1)$$

$$KV = \frac{\phi vn}{257.P1}\sqrt{\rho n \cdot T} \qquad \text{supercritical range} \qquad (2)$$

(b) for liquids:

$$KV = \phi v\sqrt{\frac{\rho.T}{\Delta P.1000}} \qquad (3)$$

in which:

$\phi vn$ = quantity of gas flow at 0 deg.C and 1 atm. (cu.m/h)

$\rho n$ = density at 90 deg.C + 1 atm. (kg/cu.m)

T = temperature (K)

P1 = inlet pressure (bara)
P2 = outlet pressure (bara)
ΔP = pressure difference (bard)
$\phi v$ = quantity of liquid flow (cu.m./h)
$\rho$ = density (kg/cu.m)

It can be seen from these formulae that with a changed pressure difference or with changing inlet or outlet pressure the KV value also changes, so that in fact another diameter d of passage would also have to be chosen in each case for the valve seat. In processes with varying pressure differences with equal gas or liquid flows, only one KV value is thus in fact the optimum. In most cases, one selects the KV value, i.e. the diameter d of passage, of the valve seat at the lowest pressure or the lowest pressure difference. This means that at higher pressures or higher pressure differences the KV value is in fact too high (too great a diameter d of passage), which leads to poor a control performance.

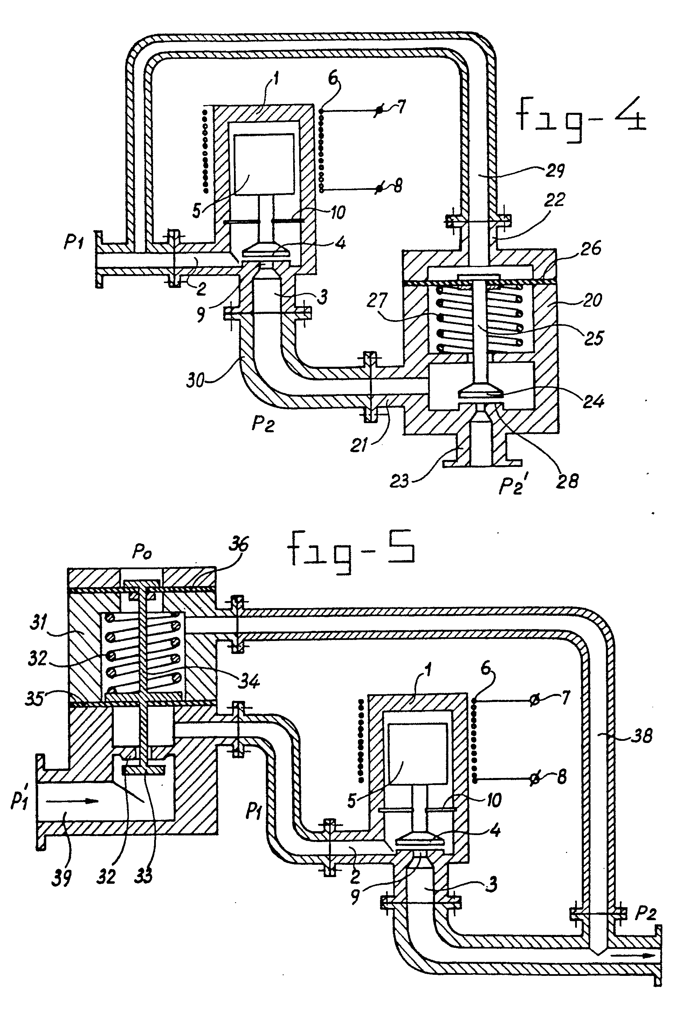

Figs. 2a and 2b show in schematic form two embodiments of control devices according to the invention. The same reference numbers are used in both figures. The two devices are provided with a series arrangement of a control valve 11, of the type which is shown as an example in Fig. 1, and a pressure reducing valve 12 fitted in the fluid flow conduit 13. In Fig. 2a the pressure reducing valve 12 is fitted upstream of the control valve 11. The pressure reducing valve 12 is operated via the control function 14 by the pressure difference ΔP = P1 - P2, in such a way that this pressure difference remains (at least approximately) constant. If the ΔP is also maintained at such a value that the valve operates in the subcritical range, then it appears from the above formula (1) that, assuming that P2 is constant, the KV value is in fact a constant value, which means that the diameter d of passage of the valve seat can be selected at its optimum value. The KV value is then further independent of the inlet pressure P1', and even if the outlet pressure P2 shows a variation, the effect thereof compared with known control valves is greatly reduced.

In the embodiment of Fig. 2b the control valve 11 is upstream of the pressure reducing valve 12. In this case the functioning of the whole unit is in fact identical to that of Fig. 2. However, Fig. 2a is based on at least approximately constant outlet pressure P2, while Fig. 2b is based on at least approximately constant inlet pressure P1. Since the pressure difference ΔP over the fluid control valve 11 is kept constant, in that case the outlet pressure of the fluid control valve P2 is also approximately constant, irrespective of the pressure P2' downstream of the pressure reducing valve 12, so that in this embodiment also the KV value has a constant value and thus the diameter d of passage of the valve seat can be selected at an optimum value.

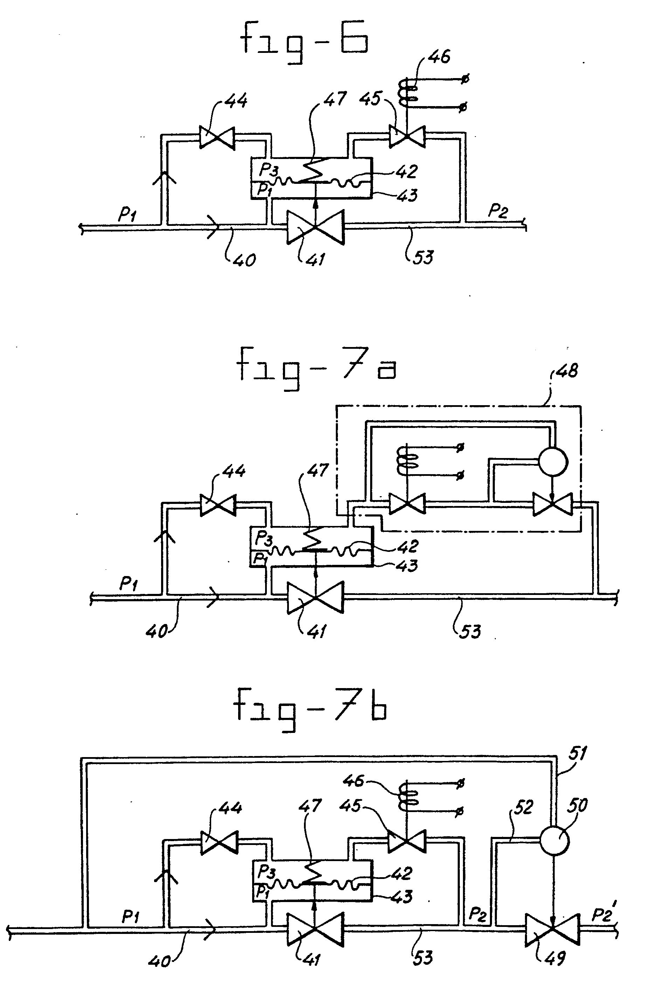

In control systems in which both the inlet pressure P1 and the outlet pressure P2 can vary greatly, it is preferable to use a different embodiment, in which in the control of the pressure reducing valve account is also taken of the outlet pressure P2. Examples thereof are shown in Figs. 3a and 3b. In this Fig. 3a the control valve 11 is downstream of the pressure reducing valve 12. The pressure difference ΔP = P2 - P1 is again held constant by both P2 and P1 being fed to the control function 14.The output signal from the control function 14 is not - as in fig. 2 - used directly as a control signal for the pressure reducing valve 12, but is fed to a further control function 15 together with the outlet pressure P2 of the control valve 11 and a constant reference pressure signal P0, which can, for example, have the normal atmospheric pressure. The output signal from this second control function 15 is used as the control signal for the pressure reducing valve 12, in such a way that the product ΔP . P2 is kept constant. It will be clear from the above formula (1) that by keeping ΔP.P2 constant, the KV value is constant in all circumstances, regardless of any varying Inlet pressure P1 and/or varying outlet pressure P2. With such a control device, the quantity of fluid flow through the device can therefore be regulated in the optimum manner, irrespective of varying inlet or outlet pressures.

Fig. 3b shows another embodiment, with the pressure regulator 12 downstream of the fluid regulator 1. The functioning of this embodiment will not require further explanation after the above.

The improvement which is achieved with the aid of the invention will be indicated below with an numerical example.

The following data are taken as the basis:

ΔPmin = 1 bard
P1 = 10 - 400 bars
P2 = 0 - 399 bars
$\phi vn$ = 514 1n/h
$\rho n$ = 1.25 kg/cu.m. (nitrogen $N_2$)
T = 300 K

For a control valve known from the state of the art (see example in Fig. 1) without the ΔP compensation according to the invention, the following then applies:
- largest KV value at P1 = 10 bars and P2 = 0 bar

$$KV_1 = \frac{\emptyset vn}{257 \times P1} \sqrt{\rho n \times T} = \frac{514 \times 10^{-3}}{257 \times 10} \sqrt{1.25 \times 300} = 3.87 \times 10^{-3}$$

- smallest KV value at P1 = 400 and P2 = 0 bar

$$KV_2 = \frac{514 \times 10^{-3}}{257 \times 400} \sqrt{1.25 \times 300} = 9.7 \times 10^{-5}$$

From this largest and smallest KV value an overdimensioning factor can be calculated:

$$f_1 = \frac{KV_1}{KV_2} = \frac{3.87 \cdot 10^{-3}}{9.7 \times 10^{-5}} \approx 40$$

For an embodiment of the device according to the invention such as that illustrated in Fig. 2a or 2b, assuming that $\Delta P$ is chosen in such a way that the gas flow remains in the sub-critical region:
- largest KV value at P1 = 10 bars and P2 = 10 - 1 = 9 bars

$$KV_3 = \frac{514 \times 10^{-3}}{514} \sqrt{\frac{1.25 \times 300}{1 \times 9}} = 6.4 \times 10^{-3}$$

- smallest KV value at P1 = 400 bars and P2 = 99 bars

$$KV_4 = \frac{514 \times 10^{-3}}{514} \sqrt{\frac{1.25 \times 300}{1 \times 399}} = 9.6 \times 10^{-4}$$

From this largest and smallest KV value the overdimensioning factor can again be calculated:

$$f_2 = \frac{KV_3}{KV_4} = \frac{6.4 \times 10^{-3}}{9.6 \times 10^{-4}} \approx 6.6$$

Thanks to the $\Delta P$ compensation according to Figs. 2a or 2b, a clear improvement in this overdimensioning factor is thus achieved, which is in practice expressed by a greatly improved control performance.

It will be clear that the embodiments of Figs. 3a and 3b give an even greater improvement and in principle reduce the over-dimensioning factor to 1.

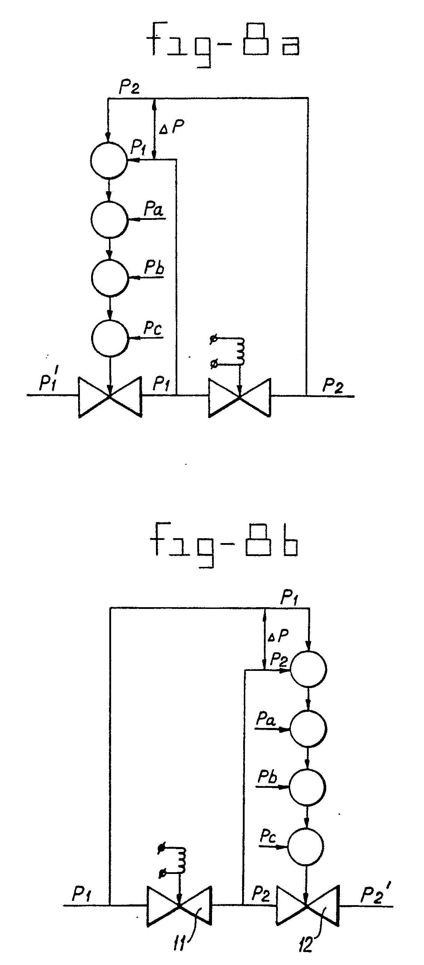

Fig. 4 shows very schematically a more practical embodiment of a control device according to the invention, corresponding to the embodiment of Fig. 2b. The control valve is shown on the lefthand side of this figure, and the parts thereof have the same reference numbers as in Fig. 1. Shown on the righthand side is the pressure reducing valve, provided with the housing 20 containing the valve element 24 which works in conjunction with the seat part 28 of the housing. The valve element 24 is connected to a valve stem 25, whose other end is attached to a diaphragm 26 which is held under tension in the housing 20. The spring 27 works between the diaphragm 26 and an inward projecting part of the housing. Via the line 30 and the connection socket 21 of the housing 20, the pressure reducing valve is connected to the outlet side of the control valve. Via the line 29 and the inlet socket 22 of the housing 20, the inlet pressure P1 of the device is conveyed to the pressure reducing valve. The outlet socket 23 of the housing 20 also forms the outlet of the device.

After the description of Fig. 2b, the way in which this embodiment works will be clear without further explanation.

Fig. 5 shows a schematic view of a more practical embodiment of the device of Fig. 3a. Shown on the righthand side of the figure again is the control valve of Fig. 1, which is indicated by the same reference numbers. On the lefthand side is the pressure reducing valve, which carries out both ΔP compensation and P2 compensation.

This pressure reducing valve is provided with the housing 31, with a seat part 32. Located in this housing is the valve element 33 with the valve stem 34, which is connected at two points with a diaphragm 35 and 36. By means of a spring 37, the diaphragm 35 is pushed downwards.

The outlet pressure P2 of the device is fed through a line 38 to the chamber between the diaphragms 35 and 36. The reference pressure, in this case the atmospheric pressure P0, is at the top side of the diaphragm 36 and the fluid flows into the device with the pressure P1' via the conduit 39.

After the description of Fig. 3a, the way in which this embodiment works will also be clear and will require no further explanation.

Fig. 6 illustrates an embodiment of an indirectly controlled valve device. Located in the main flow pipe is the valve 41, the position of whose valve element is regulated by a diaphragm 42 disposed in the diaphragm chamber 43. The spring 47 is also located in the top side of the diaphragm chamber 43. The bottom side of this diaphragm chamber 43 is directly connected to the incoming fluid pipe 40 and the top side of the diaphragm chamber 43 is connected by means of a pressure restriction element 44 - known per se - to the inlet pipe 40. The top side of the diaphragm chamber 43 is also connected by means of a controllable valve 45, which is controlled by a solenoid 46, to the outlet pipe 47.

The inlet pressure is equal to P1, the outlet pressure is equal to P2, and the pressure in the top side of the diaphragm chamber is indicated by P3. If the valve 45 is closed and no fluid is therefore flowing through the pressure restriction element 44, then the spring 47 in the diaphragm chamber 43 will ensure that the valve 41 remains shut, and in that case P1 = P3, so that no lifting force is exerted on the diaphragm.

If the valve 45 is now opened via the solenoid 46, fluid will start to flow via the pressure restriction element 44, the top side of the diaphragm chamber 43 and the valve 45 to the outlet pipe. Since this fluid flow undergoes a pressure drop over the pressure restriction element, P3 will be smaller than P1. On account of the pressure difference P1 - P3, a lifting force which is larger than the force of the spring 47 occurs, so that the diaphragm 42, and thus the valve element of the valve 41, can be moved, so that the main flow conduit 40-47 can be opened to a larger or lesser extent. By controlling the flow through the valve 45, the lifting force on the diaphragm and thus the throughflow passage through the valve 41 can therefore be controlled.

The advantage of such a pilot construction is that with a relatively small current strength through the coil 46 a much wider control range can be achieved than is possible with a directly controlled valve such as, for example, that illustrated in Fig. 1. However, with this device too, there will be a varying pressure difference ΔP = P3 - P2 over the control valve 45, which leads to a control process which is not ideal. Depending on the particular situation, a pressure reducing valve can now be added according to the invention in various ways, by means of which the pressure difference is kept (virtually) constant over the control valve 45.

Fig. 7a shows a schematic embodiment in which the control valve 45 of Fig. 6 within dotted line 48 is replaced by a control unit of the type illustrated in Fig. 2b. The different parts thereof are no longer referenced separately. It will be clear, without further detailed discussion, that a greatly improved regulation is obtained in this embodiment. A further improvement is obtained if an embodiment according to Fig. 3a or 3b is used within the dotted line 48.

Fig. 7b illustrates an embodiment in which the pressure reducing valve 49 is disposed in the outlet pipe 47 of the valve 41. Via the line 52 the pressure P2 and via the line 51 the pressure P1 are fed to the control function 50, and the pressure reducing valve now tries again to keep ΔP = P1 - P2 constant. Owing to the small drop in pressure over the restriction element 44, the pressure difference ΔP' = P3 - P2 over the control valve 45 will also be kept (virtually) constant, resulting in an improved control performance of the device as a whole.

It will be clear that by analogy with Fig. 2a, the pressure reducing valve in Fig. 7b can also be placed upstream of the valve 41. It will also be clear that in Fig. 7b a $\Delta$ P.P2 compensation can also be carried out by analogy with Fig. 3a or 3b.

Fig. 8 shows schematically a further development of the invention, provided with a pressure reducing valve which is controlled in such a way that the regulation device tries to keep $\Delta$P.(Pa.Pb.Pc...) constant, where Pa, Pb, Pc... are arbitrary pressures to which the control device must react. In the above, pressure P2 is given as an example.

In the practical embodiment shown in Fig. 5, the pressure reducing valve has, in addition to the diaphragm 35 for the P-dependent regulation, a second diaphragm 36, with which the regulation of the device is also dependent on P2. This second diaphragm creates a separate chamber to which the pressure P2 is fed. By adding further diaphragms, further chambers can be added, to which further pressures can be fed. It will be clear that therewith the above-mentioned $\Delta$P.(Pa.Pb.Pc...) control can be achieved.

## Claims

1. A 2-way valve device for controlling the quantity of fluid flow through a pipe (13; 40,53), said device being provided with one input and one output to connect the device in said pipe, a first control valve (11; 45) having a valve element (4) whose position relative to the valve seat (9) belonging to it directly or indirectly determines the quantity of the fluid flow through the pipe, said valve element (4) being movable at one side by a progressive spring (10) in one direction relative to the valve seat and at the other side by a first controllable actuation element against the spring force in the opposite direction relative to the valve seat, and provided with a second pressure reducing valve (12; 49) in series with said first control valve, the valve element (24,33) of said pressure reducing valve being controlled by a second actuation mechanism receiving during operation signals corresponding to two predetermined pressures in the device, characterized in that said two predetermined pressures are the pressures at the input (P1) and at the output (P2) of the first control valve (11,45) and that the second actuation mechanism in response to the difference ($\Delta$P) between said predetermined pressures controls the valve element (24,33) of the second pressure reducing valve (12,49) such that said pressure difference ($\Delta$P) is maintained constant.

2. Device according to claim 1, characterized in that the second actuation mechanism in response to the received pressure signals controls the valve element of the second pressure reducing valve such that the product of said pressure difference and the output pressure of the first control valve is maintained constant.

3. Device according to claim 1 or 2, characterized in that signals corresponding to one or more other pressures (Pa, Pb, Pc) are supplied to the second actuation mechanism, and that the second actuation mechanism in response to the received pressure signals controls the valve element of the second pressure reducing valve such that the product of said pressure difference and said other one or more pressures is maintained constant.

4. Pilot configuration comprising a device according to claim 1, 2 or 3, characterized in that the device comprises a third control valve (41) connected between the input conduit and the output conduit of the configuration and having a valve element which is pressed at one side by means of a spring (47) against its valve seat and at the other side is connected to a diaphragm (42) positioned between two chambers (P3, P1), the first chamber of which is coupled directly to said input conduit (40) whereas the second chamber is coupled on the one hand via a flow restricting element (44) to said input conduit and on the other hand to a control output of the configuration, whereby the device according to claim 1, 2 or 3 is coupled with its input to said control output and with its output to the output conduit of the configuration.

5. Pilot configuration comprising a device according to claim 1, 2 or 3, characterized in that the configuration comprises a third control valve (41) having an input conduit and an output conduit and having a valve element which is pressed at one side by means of a spring (47) against its valveseat and at the other side is connected to a diaphragm (42) positioned between two chambers (P3, P1), the first chamber of which is coupled directly to said input conduit (40) whereas the second chamber is coupled on the one hand via a flow restricting element (44) to said input conduit and on the other hand to a control output of the configuration, in which configuration said control output is coupled to the input of the device according to claim 1, 2 or 3, the output conduit is coupled to the output of the first control valve of said device and the input conduit of said device is coupled to the input of the configuration, whereby the pressure at said input of the configuration is supplied to the actuation mechanism of the pressure reducing valve instead of the input pressure of the first control valve.

## Revendications

1. Dispositif de vanne bidirectionnelle pour commander le débit d'un fluide à travers une conduite (13 ; 40, 53), ledit dispositif comportant une entrée et une sortie pour relier les dispositifs dans ladite conduite, une première vanne de commande (11 ; 45) ayant un élément de vanne (4) dont la position par rapport au siège de vanne (9) correspondant détermine directement ou indirectement la quantité de fluide passant par la conduite, ledit élément de vanne (4) étant mobile d'un côté au moyen d'un ressort de progression (10) dans une première direction par rapport au siège de vanne et de l'autre côté au moyen d'un premier élément actionneur contrôlable s'opposant à la force du ressort dans la direction opposée par rapport au siège de vanne, et équipé d'une seconde vanne détendeur (12 ; 49) en série avec ladite première vanne de commande, l'élément de vanne (24, 33) de ladite vanne détendeur étant commandée par un second mécanisme actionneur recevant en cours de fonctionnement des signaux qui correspondent à deux pressions prédéterminées d'un dispositif, caractérisé en ce que lesdites deux pressions prédéterminées sont les pressions à l'entrée (P1) et à la sortie (P2) de la première vanne de commande (11, 45) et en ce que le second mécanisme actionneur en réponse à la différence (ΔP) entre lesdites pressions prédéterminées commande l'élément de vanne (24, 33) de la seconde vanne détendeur (12, 49) de telle sorte que ladite différence de pression (ΔP) soit maintenue constante.

2. Dispositif selon la revendication 1, caractérisé en ce que le second mécanisme actionneur en réponse aux signaux de pression reçus commande l'élément de vanne de la seconde vanne réducteur de telle sorte que le produit de ladite différence de pression et de la pression de sortie de la première vanne de commande soit maintenu constant.

3. Dispositif selon la revendication 1 ou 2, caractérisé en ce que des signaux correspondant à une ou plusieurs autres pressions (Pa, Pb, Pc) sont appliqués au second mécanisme actionneur, et en ce que le second mécanisme actionneur en réponse aux signaux de pression reçus commandent l'élément de vanne de la seconde vanne détendeur de façon que le produit de ladite différence de pression et de ladite ou desdites autres pressions soit maintenu constant.

4. Configuration pilote comprenant un dispositif selon l'une des revendications 1, 2 ou 3, caractérisé en ce que le dispositif comprend une troisième vanne de commande (41) montée entre le conduit d'entrée et le conduit de sortie de la configuration et comportant un élément de vanne qui est comprimé d'un côté au moyen d'un ressort (47) contre son siège de vanne et de l'autre côté est relié à un diaphragme (42) placé entre deux chambres (P3, P1), dont la première chambre est couplée directement audit conduit d'entrée (40) tandis que la seconde chambre est couplée, d'une part, par un élément limiteur de débit (44) ou d'une conduite d'entrée et, d'autre part, à une sortie de commande de la configuration, de sorte que le dispositif selon l'une des revendications 1, 2 ou 3 soit couplé à son entrée à ladite sortie de commande et à sa sortie au conduit de sortie de la configuration.

5. Configuration pilote comprenant un dispositif selon l'une des revendications 1, 2 ou 3, caractérisé en ce que la configuration comprend une troisième vanne de commande (41) ayant un conduit d'entrée et un conduit de sortie et comportant un élément de vanne qui est appuyé d'un côté au moyen d'un ressort (47) contre son siège de vanne et de l'autre côté est relié à un diaphragme (42) situé entre deux chambres (P3, P1), dont la première chambre est couplée directement audit conduit d'entrée (40) tandis que la seconde chambre est couplée, d'une part, par l'intermédiaire d'un élément limiteur de débit (44) ou d'une conduite d'entrée et, d'autre part, à une sortie de commande de la configuration, dans laquelle configuration ladite sortie de commande est couplée à l'entrée du dispositif selon l'une des revendications 1, 2 ou 3, le conduit de sortie est couplé à la sortie de la première vanne de commande dudit dispositif et le conduit d'entrée dudit dispositif est couplé à l'entrée de la configuration, de sorte que la pression sur ladite entrée de la configuration est appliquée au mécanisme actionneur de la vanne détendeur au lieu de la pression d'entrée de la première vanne de commande.

## Patentansprüche

1. Eine 2-Wege-Ventilvorrichtung zur Steuerung der Menge eines Flüssigkeitsstromes durch eine Rohrleitung (13;40,53), wobei die Vorrichtung mit einem Eingang und einem Ausgang zur Verbindung mit der Vorrichtung in der Rohrleitung versehen ist, ein erstes Steuerventil (11;45) ein Ventilelement (4) aufweist, dessen relative Stellung zu dem zugehörigen Ventilsitz (9) die Menge des Flüssigkeitsstromes durch das Rohr direkt oder indirekt bestimmt, das Ventilelement (4) an einer Seite durch eine progressive Feder (10) in einer Richtung relativ zu dem Ventilsitz und an der anderen Seite durch ein erstes steuerbares Betätigungselement entgegen der Federkraft in entgegengesetzter Richtung relativ zu dem Ventilsitz bewegbar ist und mit einem zweiten Druckreduzierventil (12;49) versehen ist, das mit dem ersten Steuerventil in Reihe geschaltet ist, das Ventilelement (24,33) des Druckreduzier-Ventils durch eine zweite Betätigungsvorrichtung steuerbar ist, welche während des Betriebs Signale empfängt, die zwei vorbestimmten Drücken in der Vorrichtung entsprechen, dadurch gekennzeichnet, daß die beiden vorbestimmten Drücke die Drücke an dem Eingang (P1) und an dem Ausgang (P2) des ersten Steuerventils (11,45) sind und daß die zweite Betätigungsvorrichtung in Abhängigkeit von der Differenz (ΔP) zwischen den vorbestimmten Drücken das Ventilelement (24,33) des zweiten Druckreduzier-Ventils (12,49) derart steuert, daß die Druckdifferenz (ΔP) konstant gehalten wird.

2. Vorrichtung nach Anspruch 1, dadurch gekennzeichnet, daß die zweite Betätigungsvorrichtung in Abhängigkeit von den empfangenen Drucksignalen das Ventilelement des zweiten Druckreduzier-Ventils derart steuert, daß das Produkt der Druckdifferenz und des Ausgangsdrucks des ersten Steuerventils konstant gehalten wird.

3. Vorrichtung nach Anspruch 1 oder 2, dadurch gekennzeichnet, daß einem oder mehreren anderen Drücken (Pa, Pb, Pc) entsprechende Signale der zweiten Betätigungsvorrichtung zugeführt werden, und daß die zweite Betätigungsvorrichtung in Abhängigkeit von den empfangenen Drucksignalen das Ventilelement des zweiten Druckreduzier-Ventils derart steuert, daß das Produkt der Druckdifferenz und des anderen einen Druckes oder der anderen Mehrzahl von Drücken konstant gehalten wird.

4. Steuerschaltung mit einer Vorrichtung gemäß Anspruch 1, 2 oder 3, dadurch gekennzeichnet, daß die Vorrichtung ein drittes Steuerventil (41) umfaßt, das zwischen die Eingangsleitung und die Ausgangsleitung der Schaltung geschaltet ist und ein Ventilelement aufweist, das an einer Seite mittels einer Feder (47) gegen seinen Ventilsitz gepreßt wird und an der anderen Seite mit einer Membran (42) verbunden ist, die zwischen zwei Kammern (P3, P1) positioniert ist, wobei die erste Kammer direkt mit der Eingangsleitung (40) verbunden ist, während die zweite Kammer einerseits über ein die Strömung drosselndes Element (44) mit der Eingangsleitung und andererseits mit einem Steuerausgang der Schaltung verbunden ist, wodurch die Vorrichtung gemäß Anspruch 1, 2 oder 3 mit ihrem Eingang an den Steuerausgang sowie mit ihrem Ausgang an die Ausgangsleitung der Schaltung angeschlossen ist.

5. Steuerschaltung mit einer Vorrichtung gemäß Anspruch 1, 2 oder 3, dadurch gekennzeichnet, daß die Schaltung ein drittes Steuerventil (41) mit einer Eingangsleitung und einer Ausgangsleitung sowie einem Ventilelement umfaßt, das an einer Seite mittels einer Feder (47) gegen seinen Ventilsitz und an der anderen Seite mit einer Membran (42) verbunden ist, die zwischen zwei Kammern (P3, P1) positioniert ist, von denen die erste Kammer direkt mit der Eingangsleitung (40) verbunden ist, während die zweite Kammer einerseits über ein Strömungsdrosselelement (44) mit der Eingangsleitung und andererseits mit einem Steuerausgang der Schaltung verbunden ist, wobei in der Schaltung der Steuerausgang an den Eingang der Vorrichtung gemäß Anspruch 1, 2 oder 3 angeschlossen ist, die Ausgangsleitung mit dem Ausgang des ersten Steuerventils der Vorrichtung verbunden ist und die Eingangsleitung der Vorrichtung an den Eingang der Schaltung angeschlossen ist, wodurch der Druck am Eingang der Schaltung der Betätigungsvorrichtung des Druckreduzier-Ventils anstelle des Eingangsdrucks des ersten Steuerventils zugeführt wird.

fig-1

fig-2a

fig-2b

fig-3a

fig-3b

fig-4

fig-5

fig-6

fig-7a

fig-7b

# fig-8a

# fig-8b